# EUROPÄISCHE PATENTSCHRIFT

(11) **EP 1 852 605 B1**
(45) Veröffentlichungstag und Bekanntmachung des Hinweises auf die Patenterteilung: **04.05.2016**
(21) Anmeldenummer: 06026052.8
(22) Anmeldetag: 15.12.2006
(51) Int. Cl.: F03D 7/02, F03D 9/00, H02J 9/06

(54) **Verstellen von Rotorblättern einer Windkraftanlage im Notfallbetrieb**
Adjusting pitch of wind turbine blades in emergency situation.
Réglage du pas de pales d'une éolienne en cas de situations d'urgence

(30) Priorität: 15.12.2005 DE 102005060422
(43) Veröffentlichungstag der Anmeldung: 07.11.2007
(73) Patentinhaber: Osterholz Antriebs Technik GmbH, 32278 Kirchlengern (DE)
(72) Erfinder: Dipl.-Ing. Herbert Hemker, 49326 Melle (DE)
(74) Vertreter: Ostermann, Thomas

(56) Entgegenhaltungen:
- WO-A1-2005/017350
- US-B1- 6 175 511

## Beschreibung

Die Erfindung betrifft eine Vorrichtung zum Verstellen von Rotorblättern nach dem Patentanspruch 1.

Moderne Windkraftanlagen in einem Leistungsbereich größer 500 kW mit bevorzugt horizontal ausgeführter Rotorwelle besitzen verstellbare Rotorblätter. Dadurch lässt sich die Angriffsfläche der Windgeschwindigkeit anpassen und eine annähernd konstante Leistung der Windkraftanlage einstellen. Windkraftanlagen dieser Art können somit noch bei vergleichsweise hohen Windgeschwindigkeiten oberhalb der Nennwindgeschwindigkeit betrieben werden. Oberhalb der Nennwindgeschwindigkeit, für die eine Windkraftanlage konstruktiv ausgelegt ist, ist es notwendig, die Leistung zu begrenzen. Dieses wird durch verstellen der Rotorblätter in Richtung Fahnenstellung realisiert, was eine Verschlechterung des Rotorwirkungsgrads zur Folge hat. Auf diese Weise können Schäden an den Windkraftanlagen durch Überbelastungen vermieden werden.

Als weiterer unplanmäßiger Belastungsfall einer Windkraftanlage ist der mögliche Wegfall der elektrischen Last durch den Hauptgenerator anzusehen. Ursachen für diese Notsituation können beispielsweise der Ausfall des Stromnetzes, des Umrichters oder auch des Hauptgenerators selbst sein. Dadurch kann es zu einem sehr schnellen Hochlaufen der Rotorwelle durch das nun fehlende Gegenmoment des Hauptgenerators kommen. Eine mechanische Überbelastung der Windkraftanlage durch unzulässig hohe Drehzahlen wäre die Folge. Zur Vermeidung eines solchen Belastungsfalles werden üblicherweise die Rotorblätter oder auch nur eines in eine sogenannte Fahnenstellung verdreht. Vorteilhafter Weise werden alle Rotorblätter aus dem Wind gedreht. Dabei wird entweder die Vorderkante oder die Hinterkante des Rotorblattprofils in den Wind verdreht, so dass kein antreibender Auftrieb mehr an dem Rotorblattprofil entstehen kann.

Die Einrichtung zur Verstellung der Rotorblätter in die Fahnenstellung ist im technischen Sinne sicher auszuführen. Es ist folglich sicherzustellen, dass z. B. auch in der Notsituation eines Netzausfalls eine energetische Versorgung für die Verstellantriebe der Rotorblätter gewährleistet ist. Aus diesem Grund ist es bekannt, eine unabhängige Hilfsenergieeinrichtung in Form eines Akkumulators als Energiespeicher zu verwenden, der im Fehlerfall die Energie für die Stellantriebe zur Verfügung stellt.

In Notsituationen, wie z. B. im Ausfall der elektrischen Stromversorgung, ist also sicherzustellen, dass die Position der Rotorblätter verstellbar ist. Dies ist beispielsweise auch dann notwendig, wenn zu starke Winde auf die Flügel einwirken. Der oder die Motoren zur Verstellung der Stellung der Rotorblätter der Windkraftanlage werden z. B. über einen Umrichter gespeist. Das elektrische Antriebssystem weist einen Gleichrichter, einen Zwischenkreis und einen Wechselrichter auf. Das elektrische Antriebssystem wird über ein elektrisches Stromversorgungsnetz gespeist. Für den Notbetrieb der Verstellung der Rotorblätter der Windkraftanlage wird der Zwischenkreis des Umrichters durch einem Akkumulatorsatz gespeist. Hierdurch ist ein autarker netzunabhängiger Betrieb sichergestellt. Der Akkumulator ist durch ein Netzteil, welches einen Gleichrichter darstellt, ladbar. Ungünstig ist bei allen derzeit eingesetzten elektrischen Antriebssystemen die direkte Aufkopplung des Energiespeichers auf den Zwischenkreis oder direkt auf einen Gleichstrommotor. Da für die Auslegung die Verstellgeschwindigkeit eines Rotorblattes bei Netzausfäll, also bei Notbetrieb maßgebend ist, muss die Auslegung des Systems auf die Akkumulatorspannung erfolgen. Denn gerade bei Lastabfall ist die höchste Verstellgeschwindigkeit nötig, um die Windenergieanlage vor unzulässiger Überdrehzahl zu schützen. Derzeit werden Akkumulatorsätze eingesetzt, deren Nennspannung nur einen Bruchteil der nominellen Zwischenkreisspannung (U x √2) beträgt. Um den Netz Einschaltstrom bei Wiederkehr der Netzspannung zu begrenzen, werden gesteuerte Stromrichter oder Transformatoren zur Reduzierung der Spannung eingesetzt. All diese Systeme haben u. a. den Nachteil, dass die mögliche Zwischenkreisspannung U · √2) nur zu einem Bruchteil genutzt wird, da die Akkumulatorspannung Netz maßgebend für die Antriebsauslegung der Notfahrt ist. Da die benötigte Antriebsleistung nun durch mehr Strom bereitgestellt werden muss, sind somit der Wechselrichter und der Motor wie auch Stecker und Kabel für deutlich höhere Ströme zu dimensionieren. Diese deutlich höheren Ströme verursachen erhöhte Verlustleistung (I² · R), welche zu Folgeproblemen bei der Wärmeabfuhr aus den Steuerkästen führt.

Aus der DE 100 09 472 A1 ist eine Vorrichtung zum Verstellen von Rotorblättern einer Windkraftanlage bekannt, die eine Notstromversorgungseinrichtung für einen die Rotorblätter verstellenden Verstellmotor vorsieht. Die Notstromversorgungseinrichtung weist einen Permanentmagnet-Generator auf, der über elektrische Leitungen mit dem Verstellmotor verbindbar ist. Zur Aktivierung des Notfallbetriebs ist ein Schütz vorgesehen. Nachteilig an der bekannten Vorrichtung ist, dass für den Notfallbetrieb eine zusätzliche Maschine erforderlich ist.

Aus der WO 2005/017350 A1 ist eine Vorrichtung zum Verstellen von Rotorblättern einer Windkraftanlage mit einem Verstellmotor und mit einer Notstromversorgungseinrichtung bekannt. Im Notfallbetrieb kann die in einem Energiespeicher der Notstromversorgungseinrichtung gespeicherte elektrische Energie über einen Umrichter an den Verstellmotor abgegeben werden, so dass die Rotorblätter in eine Fahnenstellung bringbar sind.

Aufgabe der vorliegenden Erfindung ist es, eine Vorrichtung zum Verstellen von Rotorblättern einer Windkraftanlage derart weiterzubilden, dass auf einfache Weise auch im Notfallbetrieb an dem Zwischenkreis zumindest eine Nennspannung anliegt, obwohl ein Energiespeicher für eine geringere Nennspannung ausgelegt ist.

Zur Lösung dieser Aufgabe weist die Erfindung die Merkmale des Patentanspruchs 1 auf.

Der besondere Vorteil der Erfindung besteht darin, dass durch Vorsehen eines Wandlers in der Notstromversorgungseinrichtung auch im Notfallbetrieb eine Zwischenkreisspannung bereitgestellt werden kann, die zumindest der Zwischenkreisnennspannung im Normalbetrieb entspricht, obwohl die Nennspannung des Energiespeichers kleiner ist als die Nennspannung des Zwischenkreises. Der erfindungsgemäße Wandler transformiert im Notfallbetrieb die Klemmenspannung des Energiespeichers auf die Zwischenkreisnennspannung hoch und sorgt damit für eine Rotorblattverstellung ohne Geschwindigkeits- und Drehmomenteinbußen. Durch das Aufrechterhalten der Zwischenkreisnennspannung kommt es auch bei Wiedervorliegen der Netzspannung im Normalbetrieb zu keinen Stromspitzen im Stromnetzeingang. Auch im Normalbetrieb kann durch Aktivierung des Wandlers der Energiespeicher und der Wandler mit maximalem Strom getestet werden. Die erfindungsgemäße Notstromversorgungseinrichtung eignet sich vorzugsweise für Antriebssysteme mit Gleichstrom- und Drehstrommotoren als Verstellmotoren. Wird zum Beispiel ein Gleichstrommotor bei einer Notfahrt direkt auf den Zwischenkreis geschaltet, so kann dieser sogar noch mit einer variablen Spannung im Bereich von Nennspannung des Energiespeichers bis zur Maximalspannung des Zwischenkreises versorgt werden, was somit eine begrenzte Drehzahlregelung während der Notfahrt möglich macht. Nach der Erfindung weist der Wandler der Notstromversorgungseinrichtung einen Aufwärtswandler auf. Ferner weist der Wandler einen Abwärtswandler auf, über den der Energiespeicher an einen Anschluss des Stromnetzes angeschlossen ist, so dass der Energiespeicher im Normalbetrieb stets aufgeladen werden kann.
Nach einer bevorzugten Ausführungsform der Erfindung sind die Netzstromversorgungseinrichtung und die Notstromversorgungseinrichtung in einer gemeinsamen Schaltungsanordnung integriert zusammengeschaltet. Vorteilhaft ergibt sich hierdurch ein einfacher Schaltungsaufbau.

Nach einer bevorzugten Ausführungsform der Erfindung ist ein solcher Aufwärtswandler vorgesehen, dass in einem Ausschaltzustand eines elektronischen Schalters ein direkter Energiefluss von dem Energiespeicher zu dem Zwischenstromkreis erfolgt. Im Einschaltzustand des Schalters wird die in einer Speicherdrossel gespeicherte elektrische Energie an den Zwischenkreis weitergegeben. Das Verbringen des elektronischen Schalters von dem Einschaltzustand in den Ausschaltzustand und vice versa erfolgt in Abhängigkeit von einem unteren bzw. oberen Stromschwellwert. Dieser Stromschwellwert ist vorzugsweise vorgegeben und kann von Steuermitteln für den elektronischen Schalter erkannt werden.

Nach einer Weiterbildung der Erfindung ist eine Regel- und/oder Steuereinheit vorgesehen, so dass bei Erkennen des Vorliegens einer durch das Stromnetz gelieferten Nennspannung am Zwischenkreis der Schalter selbsttätig in den Ausschaltzustand versetzt wird und damit der Notfallbetrieb beendet ist.

Vorteilhaft dient die Freilaufdiode des Aufwärtswandlers als eine Sperrdiode, die im Normalbetrieb ein Entladen des Energiespeichers über den Zwischenkreis verhindert.

Nach einer Weiterbildung der Erfindung ist der Energiespeicher über einen Abwärtswandler an einem Anschluss des Stromnetzes angeschlossen, so dass der Energiespeicher im Normalbetrieb stets aufgeladen werden kann.

Nach einer Weiterbildung der Erfindung ist der Energiespeicher als ein Lithium-Ionen-Akkumulatorsatz ausgebildet. Vorteilhaft kann der Energiespeicher hierdurch relativ klein und leicht ausgeführt sein, so dass eine relativ hohe Energiedichte gewährleistet werden kann.

Ausführungsbeispiele der Erfindung werden nachfolgend anhand der Zeichnungen näher erläutert.

Es zeigen:
- Figur 1: ein Schaltbild einer Schaltungsanordnung enthaltend eine Netzstromversorgungseinrichtung und eine Notstromversorgungseinrichtung,
- Figur 2: ein Schaltbild einer Notstromversorgungseinrichtung, die ausgangsseitig an einem Zwischenkreisumrichter und eingangsseitig an eine Ladeschaltung angeschlossen ist und
- Figur 3: ein Schaltbild einer Notstromversorgungseinrichtung, in der ein Aufwärts- und ein Abwärtswandler integriert sind.

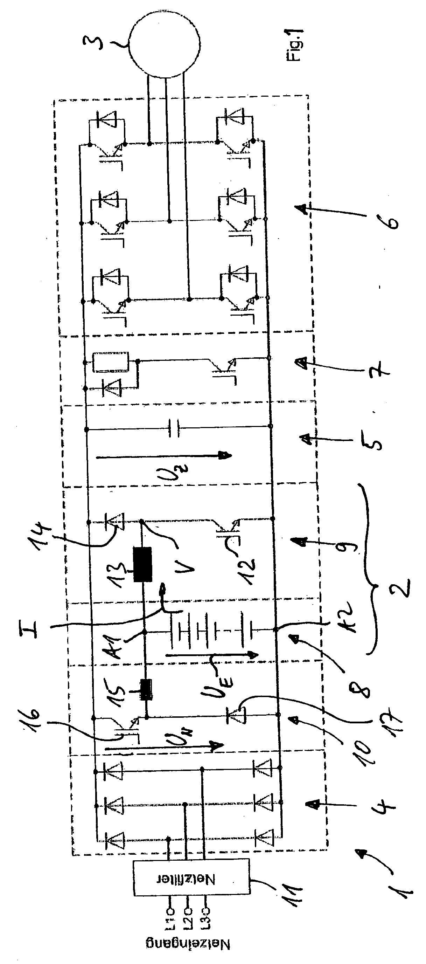

In Figur 1 ist eine Vorrichtung zum Verstellen von Rotorblättern einer Windkraftanlage dargestellt, die im Wesentlichen aus einer Netzstromversorgungseinrichtung 1 und einer Notstromversorgungseinrichtung 2 besteht. Die Netzstromversorgungseinrichtung 1 dient zur Stromversorgung eines Verstellmotors 3, mittels dessen der Anstellwinkel der Rotorblätter verstellt werden kann. Hierdurch kann beispielsweise die Drehzahl des Rotors der Windkraftanlage in Abhängigkeit von der Windstärke eingestellt werden. Beispielsweise können die Rotorblätter bei einer Störung in eine Fahnenstellung gebracht werden, bei der Profilhinterkanten oder Profilvorderkanten des Rotorblattes gegen den Wind ausgerichtet sind. Bei Ausfall der Netzstromversorgungseinrichtung 1 wird selbsttätig die Notstromversorgungseinrichtung 2 aktiviert, die eine für den Weiterbetrieb des Verstellmotors 3 erforderliche Spannung bereitstellt.

Die Netzstromversorgungseinrichtung 1 besteht im Wesentlichen aus einem Gleichrichter 4, einem Zwischenkreis 5 sowie einem Wechselrichter 6. Zwischen dem Zwischenkreis 5 und dem Wechselrichter 6 ist ein Bremschopper 7 angeordnet, der die Zwischenkreisspannung Uz auf einen definierten Maximalwert begrenzt, wenn generatorische Energie in den Zwischenkreis 5 zurückgespeist wird.

Die Notstromversorgungseinrichtung 2 besteht im Wesentlichen aus einem Energiespeicher 8 und einem Aufwärtswandler 9. Der Energiespeicher 8 kann beispielsweise als Akkumulator bzw. wiederaufladbare Batterie ausgebildet sein. Der Aufwärtswandler 9 ermöglicht im Notfallbetrieb, in dem die Notstromversorgungseinrichtung 1 ausgefallen ist, ein Hochsetzen der am Energiespeicher 8 anliegenden Energiespeicherspannung U_{E} auf zumindest einen Nennwert der am Zwischenkreis 5 anliegenden Zwischenkreisspannung Uz.

Der Energiespeicher 8 ist über einen Abwärtswandler 10 mit dem Gleichrichter 4 gekoppelt, so dass die am Ausgang des Gleichrichters 4 liegende gleichgerichtete Netzspannung U_{N} auf die Nennspannung der Energiespeicherspannung U_{E} verringert wird.

Zwischen dem Gleichrichter 4 und den Netzanschlüssen L1, L2, L3 ist ein Netzfilter 11 angeordnet. Der in Figur 1 dargestellte Bremschopper 7 kann vollständig entfallen, wenn ein Aufwärtswandler 9 und ein Abwärtswandler 10 sowie ein durch Lithiumionenbatterien oder Kondensatoren gebildeter Energiespeicher 8 vorgesehen sind. Denn in diesem Fall kann die gesamte Rückspeiseenergie über den Abwärtswandler 10 in den Energiespeicher 8 zurückgespeist werden.

Der Aufwärtswandler 9 besteht aus einem elektronischen Schalter 12, einer Drosselspule 13 und einer Freilaufdiode 14.

Im Normalbetrieb ist der beispielsweise als Schalttransistor ausgebildete Schalter 12 offen, wobei durch die als Sperrdiode dienende Diode 14 ein Stromfluss in Richtung des einen niedrigen Spannungswert aufweisenden Energiespeichers 8 verhindert wird.

Bricht die Netzspannung U_{N} bei Ausfall der Netzstromversorgung ein, fließt ein Strom I von dem Energiespeicher 8 über die Drosselspule 4 und der Diode 14 zu dem Zwischenkreis 5. Der Stromfluss setzt ein, sobald die aktuelle Zwischenkreisspannung U_{Z} kleiner ist als ein vorgegebener Spannungswert. Dann der Aufwärtswandler an und transformiert die relativ niedrige Energiespeicherspannung U_{E} auf die vorgegebenen Nennspannung Uz des Zwischenkreises 5.

Dem Schalter 13 sind Steuermittel zugeordnet, so dass bei Absinken des Stroms I unter einen vorgegebenen unteren Schwellwert oder in Abhängigkeit von einer Zeit der Schalter 12 derart angesteuert wird, dass er in den Einschaltzustand versetzt wird. Der Schalter 12 ist an einem zwischen der Speicherdrossel 13 und der Diode 14 angeordneten Verzweigungspunkt V einerseits und einem Anschluss A2 des Energiespeichers 8 andererseits angeschlossen. Während des Einschaltzustands des Schalters 12 nimmt die Speicherdrossel 13 elektrischer Energie auf. Diese Energie wird im Ausschaltzustand des Schalters 12 an den Zwischenkreis 5 abgegeben. Der Schalter 12 wird mittels Steuermitteln in den Ausschaltzustand in Abhängigkeit von einem vorgegebenen oberen Schwellwert des Stroms I geschaltet. Der Stromfluss kommutiert von dem Zweig des Schalters 12 auf den Zweig der Freilaufdiode 14, wobei der Strom nach und nach abnimmt. Wird ein vorgegebener Stromschwellwert unterschritten, wird der Schalter 12 mittels der Steuermittel wieder von dem Ausschaltzustand in den Einschaltzustand versetzt. Durch Betrieb des Aufwärtswandlers 9 kann somit von dem Energiespeicher 8 eine Zwischenkreisspannung U_{Z} bereitgestellt werden, die der Höhe der Nennspannung Zwischenkreisspannung U_{Z} im Normalbetrieb zumindest entspricht. Optional kann die bereitgestellte Spannung Uz auch größer sein.

Eine nicht dargestellte Regel- und/oder Steuereinheit ist vorgesehen, mittels derer bei Vorliegen einer Netzspannung U_{N}, die vom Stromnetz gespeist ist, der Schalter 12 in den Ausschaltzustand versetzt wird, so dass der Notfallbetrieb beendet ist. Da die aktuelle Zwischenkreisspannung Uz im Normalbetrieb stets höher als die Spannung U_{E} des Energiespeichers 8, wird der Stromfluss mittels der Diode 14 über den Aufwärtswandler 9 verhindert.

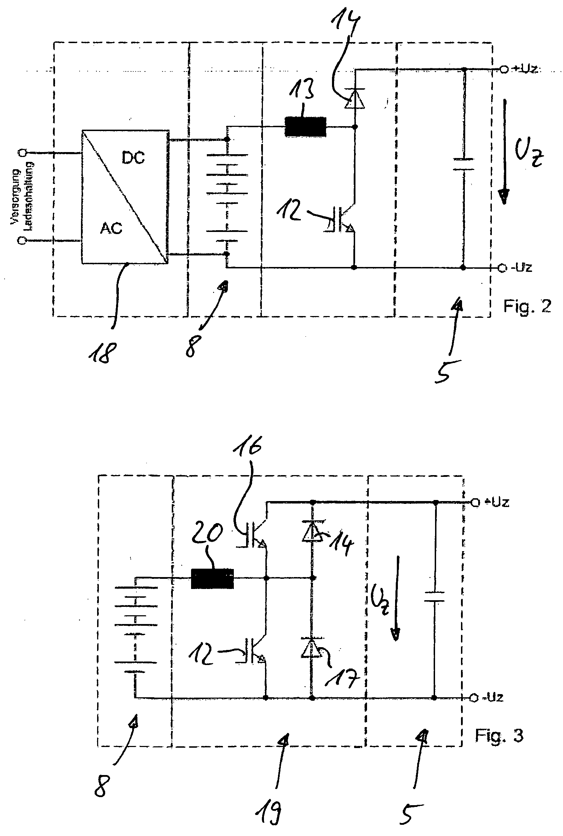

Nach einer alternativen Ausführungsform der Notstromeinrichtung 2 gemäß Figur 2 kann der Energiespeicher 10 auch über eine Ladeschaltung 18 wiederaufgeladen werden.

Nach einer alternativen Ausführungsform gemäß Figur 3 kann ein integrierter Aufwärts-/Abwärtswandler 19 vorgesehen sein, bei dem im Unterschied zu dem vorhergehenden Ausführungsbeispiel sowohl der Aufwärtswandler als auch der Abwärtswandler eine gemeinsame Speicherdrossel 20 nutzen.

Der Energiespeicher 8 weist einen Anschluss A1 auf, an dem die Speicherdrossel 13 angeschlossen ist. Ferner ist an dem Anschluss A1 eine Spule 15 des Abwärtswandlers 10 angeschlossen. Der Abwärtswandler 10 umfasst ferner einen elektronischen Schalter 16 sowie eine Diode 17. Im Einschaltzustand des Schalters 16 fließt ein Strom von dem Ausgang des Gleichrichters 4 über die Spule 15 zu dem Energiespeicher 8. Die während der Einschaltzeit des Schalters 16 von der Drossel 15 aufgenommene Energie wird bei wieder geöffnetem Schalter 16 (Ausschaltzustand) über die Freilaufdiode 17 an den Ausgang des Abwärtswandlers 9 bzw. an den Eingang des Energiespeichers 8 abgegeben.

In einer vorteilhaften Ausgestaltung des Energiespeichers ist dieser als Blei- oder Lithium-Ionen-Akkumulator (Lithium-Ionen-Akkumulatorsatz) bzw. als ein Kondensator ausführbar. Als Kondensator sind vorteilhafter Weise Ultracaps einsetzbar, wobei diese auch als Superkondensatoren bzw. als Ultrakondensatoren bezeichnet werden. Der Kondensator ist beispielsweise ein einzelner Kondensator oder als ein Kondensatorsatz ausgeführt.

In einer vorteilhaften Ausgestaltung der Notstromversorgungseinrichtung ist ein Abwärtswandler integriert, welcher die Zwischenkreisspannung herunter transformiert und den Akkumulatorsatz lädt. Dieser Abwärtswandler ist bei Bleiakkus erheblich kleiner zu dimensionieren als der Aufwärtswandler, da die zulässigen Ladeströme viel kleiner sind als die maximalen Entladeströme.

In einer weiteren vorteilhaften Ausgestaltung weist die Notstromversorgungseinrichtung zumindest eine Sicherung auf. Durch die Sicherung ist die Notstromversorgung vor zu hohen Strömen geschützt. Diese Sicherung ist in den Zeichnungen aufgrund besserer Übersichtlichkeit nicht eingezeichnet.

Werden Li-Ionen-Akkus oder Ultrakondensatoren eingesetzt, so kann der Ladestrom nahe der zulässigen Entladeströme der Akkus liegen, so dass der Abwärtswandler von der Strombelastbarkeit gleich dem Aufwärtswandler dimensioniert werden kann. Das bringt den Vorteil, dass nur eine Drossel für den Aufwärts- und Abwärtswandler benötigt wird.

Bei der Konfiguration mit Li-Ionen-Akkus oder Ultrakondensatoren kann auch Bremsenergie vom Antrieb in den Akkusatz zurückgeführt werden. In diesem Fall kann auf einen Bremschopper oder Ballastschaltung oder Netzrückspeisung verzichtet werden, wenn der Akkumulatorsatz nicht überladen wird. Die nominelle Ladung sollte in diesem Fall nicht 100 % betragen.

Wird die Steuer- und Regeleinheit der Notstromversorgungseinrichtung mit einer Schnittstelle zur Temperaturmessung, zur einzelnen Blockspannungsmessung und zur Kommunikation mit evtl. Equalizermodulen auf den einzelnen Akkus ausgestattet, so kann die Notstromversorgung auch das Batteriemanagement übernehmen, wenn die nötige Software integriert ist. Diese Lösung bietet sich an, da die Messwerte wie Akkumulatorstrom und Spannung schon durch die vorhandenen Messwandler erfasst werden.

Die Aufgabe der Erfindung ist auch durch eine Windkraftanlage lösbar, welche eine Notstromversorgungseinrichtung nach einer der vorgenannten Ausbildungen aufweist. Die Windkraftanlage weist Rotorblätter auf, wobei die Rotorblätter mindestens mittels einer elektrischen Maschine verstellbar sind und die elektrische Maschine mittels eines Umrichters gespeist wird, wobei der Umrichter einen Gleichrichter, einen Zwischenkreis und einen Wechselrichter aufweist und die Notstromversorgungseinrichtung am Zwischenkreis angeschlossen ist.

## Patentansprüche

1. Vorrichtung zum Verstellen von Rotorblättern einer Windkraftanlage mit einem Verstellmotor (3) , mit einer Netzstromversorgungseinrichtung (1), mit einem Abwärtswandler (10) und mit einer Notstromversorgungseinrichtung (2) enthaltend einen Energiespeicher (8) und einem Aufwärtswandler (9), der im Notfallbetrieb mit dem Verstellmotor (3) verbindbar ist zur Bereitstellung der für eine Verstellung der Rotorblätter in eine Fahnenstellung derselben erforderlichen elektrischen Energie, wobei, die Notstromversorgungseinrichtung (2) mit einer Netzstromversorgungseinrichtung (1) gekoppelt ist, die für den elektrischen Energiefluss von einem Stromnetz zu dem Verstellmotor (3) einen stromnetzseitigen Gleichrichter (4), einen demselben nachgeordneten Zwischenkreis (5) und einem demselben nachgeordneten Wechselrichter (6) aufweist, und wobei der Energiespeicher (8) mittels des Aufwärtswandlers (9) an dem Zwischenkreis (5) der Netzstromversorgungseinrichtung (1) gekoppelt ist, derart, dass im Notfallbetrieb zumindest eine im Normalbetrieb am Zwischenkreis (5) anliegende Zwischenkreisnennspannung (U_{Z}) bereitgestellt wird, und wobei der Energiespeicher (8) über den Abwärtswandler (10) mit dem Gleichrichter (4) gekoppelt ist zur Speisung einer Rückspeiseenergie von dem Zwischenkreis (5) in den Energiespeicher (8).

2. Vorrichtung nach Anspruch 1, wobei die Netzstromversorgungseinrichtung (1) und die Notstromversorgungseinrichtung (2) in einer gemeinsamen Schaltungsanordnung integriert angeordnet sind.

3. Vorrichtung nach Anspruch 1 oder 2, wobei der Aufwärtswandler in einem Ausschaltzustand eines Schalters (12) einen direkten Energiefluss von dem Energiespeicher (8) zu dem Zwischenkreis (5) freigibt.

4. Vorrichtung nach Anspruch 3, wobei zwischen dem Energiespeicher (8) und dem Zwischenkreis (5) eine Speicherdrossel (13) und eine Freilaufdiode (14) angeordnet sind, derart, dass im Notfallbetrieb und im Ausschaltzustand des Schalters (12) die in der Speicherdrossel (13) gespeicherte elektrische Energie an den Zwischenkreis (5) abgegeben wird.

5. Vorrichtung nach Anspruch 3 oder 4, wobei der Schalter (12) an einem zwischen der Speicherdrossel (13) und der Freilaufdiode (14) angeordnete Verzweigungspunkt (V) und einem Anschluss (A2) des Energiespeichers (8) angeschlossen ist, derart, dass im Einschaltzustand des Schalters (12) die vom Energiespeicher (8) abgegebene elektrische Energie in der Speicherdrossel (13) zwischengespeichert wird.

6. Vorrichtung nach einem der Ansprüche 3 bis 5, wobei Steuermittel vorgesehen sind, derart, dass der Schalter (12) im Notfallbetrieb bei Erreichen eines oberen Stromschwellwertes von dem Einschaltzustand in den Ausschaltzustand und bei Erreichen eines unteren Stromschwellwertes von dem Ausschaltzustand in den Einschaltzustand versetzt wird.

7. Vorrichtung nach einem der Ansprüche 3 bis 6, wobei eine Regel- und/oder Steuereinheit vorgesehen ist, derart, dass bei Vorliegen einer gleichgerichteten Netzspannung (U_{N}) an dem Zwischenkreis (5) der Schalter (12) in den Ausschaltzustand versetzt wird.

8. Vorrichtung nach einem der Ansprüche 3 bis 7, wobei die Freilaufdiode (14) im Normalbetrieb eine das Entladen des Energiespeichers (8) verhinderte Sperrdiode (17) bildet.

9. Vorrichtung nach einem der Ansprüche 3 bis 8, wobei der Schalter (12) als ein Schalttransistor ausgebildet ist.

10. Vorrichtung nach einem der Ansprüche 3 bis 9, wobei der Aufwärtswandler (9) in einem Umrichter integriert angeordnet ist.

11. Vorrichtung nach einem der Ansprüche 7 bis 10, wobei die Steuer- und/oder Regeleinheit derart ausgelegt ist, dass ein direkt am Zwischenkreis (5) aufgeschalteter Gleichstrommotor (3) als Verstellmotor im Bereich zwischen der Energiespeicherspannung (U_{E}) und der maximalen Zwischenkreisspannung (U_{Z}) im Notfallbetrieb regelbar ist.

12. Vorrichtung nach einem der Ansprüche 1 bis 11, wobei der Energiespeicher (8) als ein Lithium-Ionen-Akkumulatorsatz ausgebildet ist.

## Claims

1. A device for adjusting the pitch of wind turbine blades having an adjusting motor (3), having a mains power supply device (1), having a step-down converter (10) and having an emergency power supply device (2) containing an energy store (8) and a step-up converter (9) which can be connected to the adjusting motor (3) in an emergency situation, in order to provide the necessary electrical energy for adjusting the turbine blades into a feathered pitch of the same, wherein the emergency power supply device (2) is coupled to a mains power supply device (1) which comprises a rectifier (4) on the mains power side, an intermediate circuit (5) subordinate to the same and an inverter (6) subordinate to the same for the electrical energy flow from a power supply system to the adjusting motor (3), and wherein the energy store (8) is coupled by means of the step-up converter (9) to the intermediate circuit (5) of the mains power supply device (1), such that in an emergency situation at least one intermediate circuit rated voltage (U_{Z}) applied to the intermediate circuit (5) is provided in normal operation, and wherein the energy store (8) is coupled via the step-down converter (10) to the rectifier (4) in order to supply regenerative energy from the intermediate circuit (5) into the energy store (8).

2. The device according to Claim 1, wherein the mains power supply device (1) and the emergency power supply device (2) are integrated in a joint circuit arrangement.

3. The device according to Claim 1 or 2, wherein the step-up converter in an off state of a switch (12) releases a direct energy flow from the energy store (8) to the intermediate circuit (5).

4. The device according to Claim 3, wherein a storage choke (13) and a freewheeling diode (14) are arranged between the energy store (8) and the intermediate circuit (5), such that in an emergency situation and in the off state of the switch (12) the electrical energy stored in the storage choke (13) is output to the intermediate circuit (5).

5. The device according to Claim 3 or 4, wherein the switch (12) is connected to a branching point (V) arranged between the storage choke (13) and the freewheeling diode (14) and a connection (A2) of the energy store (8), such that in the on state of the switch (12) the electrical energy output by the energy store (8) is intermediately stored in the storage choke (13).

6. The device according to any one of Claims 3 to 5, wherein control means are provided, such that, in an emergency situation, the switch (12) on attaining an upper current threshold is moved from the on state into the off state and, on attaining a lower current threshold, is moved from the off state into the on state.

7. The device according to any one of Claims 3 to 6, wherein a regulating and/or control unit is provided, such that if a rectified mains voltage (U_{N}) exists at the intermediate circuit (5) the switch (12) is moved into the off state.

8. The device according to any one of Claims 3 to 7, wherein the free-wheeling diode (14) forms a blocking diode (17) which prevents the discharging of the energy store (8) in normal operation.

9. The device according to any one of Claims 3 to 8, wherein the switch (12) is configured as a switching transistor.

10. The device according to any one of Claims 3 to 9, wherein the step-up converter (9) is integrated in a frequency converter.

11. The device according to any one of Claims 7 to 10, wherein the control and/or regulating unit is designed such that a d.c. motor (3) which is directly locked to the intermediate circuit (5) can be regulated as an adjusting motor in the region between the energy store voltage (U_{E}) and the maximum intermediate circuit voltage (U_{Z}) in an emergency situation.

12. The device according to any one of Claims 1 to 11, wherein the energy store (8) is configured as a lithium-ion-accumulator set.

## Revendications

1. Dispositif de réglage du pas de pales de rotors d'éoliennes avec un moteur de réglage (3), avec une installation d'alimentation en courant de réseau (1), avec un convertisseur abaisseur (10) et avec une installation d'alimentation en courant de secours (2) comprenant un accumulateur d'énergie (8), avec un convertisseur élévateur (9), qui, en cas d'urgence, peut être raccordé au moteur de réglage (3) pour la mise à disposition de l'énergie électrique nécessaire au réglage des pales de rotors en position de mise en drapeau, sachant que l'installation d'alimentation en courant de secours (2) est couplée avec une installation d'alimentation en courant de réseau (1), qui, pour la transmission de l'énergie électrique d'un réseau d'électricité au moteur de réglage (3), présente un redresseur de courant (4) côté réseau d'électricité, un circuit intermédiaire (5), en aval de celui-ci, et un onduleur (6), en aval de celui-ci, et sachant que l'accumulateur d'énergie (8) est couplé avec le circuit intermédiaire (5) de l'installation d'alimentation en courant de réseau (1), au moyen du convertisseur élévateur (9), de sorte qu'au moins la tension nominale (U_{z}), appliquée sur le circuit intermédiaire (5) en régime normal, soit disponible en régime de secours, et sachant que l'accumulateur d'énergie (8) est couplé avec le redresseur de courant (4) par l'intermédiaire du convertisseur abaisseur (10), pour une récupération d'énergie du circuit intermédiaire (5) à l'accumulateur d'énergie (8).

2. Dispositif selon la revendication 1, sachant que l'installation d'alimentation en courant de réseau (1) et le dispositif d'alimentation en courant de secours (2) sont intégrés dans un circuit de commutation commun.

3. Dispositif selon revendication 1 ou 2, sachant que le convertisseur élévateur, quand un commutateur (12) est en état d'arrêt, libère un flux d'énergie direct de l'accumulateur d'énergie (8) au circuit intermédiaire (5).

4. Dispositif selon la revendication 3, sachant que, entre l'accumulateur d'énergie (8) et le circuit intermédiaire (5), sont agencées une bobine d'accumulation (13) et une diode de roue libre (14) de sorte que l'énergie électrique stockée dans la bobine d'accumulation (13) soit délivrée au circuit intermédiaire (5) en cas d'urgence et quand le commutateur (12) est à l'état d'arrêt.

5. Dispositif selon l'une des revendications 3 ou 4, sachant que le commutateur (12) est raccordé à un point de ramification (V), entre la bobine d'accumulation (13) et la diode de roue libre (14), et à un Raccord (A2) de l'accumulateur d'énergie (8) de sorte que, le commutateur (12) étant en état fonctionnement, l'énergie électrique, délivrée par l'accumulateur d'énergie (8), soit stockée intermédiairement dans la bobine d'accumulation (13).

6. Dispositif selon l'une des revendications 3 à 5, sachant que sont prévus des moyens de commande de sorte que le commutateur (12), en régime de secours, passe de l'état de fonctionnement à l'état d'arrêt lorsqu'une valeur de seuil supérieure est atteinte, et passe de l'état d'arrêt à l'état de fonctionnement lorsqu'une valeur de seuil inférieure est atteinte.

7. Dispositif selon revendication 3 à 6, sachant qu'est prévue une unité de réglage et / ou de commande de sorte que le commutateur (12) passe à l'état d'arrêt en présence d'une tension de réseau redressée (U_{N}) sur le circuit intermédiaire (5).

8. Dispositif selon l'une des revendications 3 à 7, sachant que la diode de roue libre (14) en régime normal forme une diode de verrouillage (17) qui empêche la décharge de l'accumulateur d'énergie (8).

9. Dispositif selon l'une des revendications 3 à 8, sachant que le commutateur (12) est réalisé sous la forme d'un transistor de commutation.

10. Dispositif selon l'une des revendications 3 à 9, sachant que le convertisseur élévateur (9) est intégré dans un convertisseur.

11. Dispositif selon l'une des revendications 7 à 10, sachant que l'unité de commande et / ou de réglage est conçue de telle manière qu'un moteur à courant continu (3), directement connecté sur le circuit intermédiaire (5), puisse être réglé en régime de secours, en tant que moteur de réglage, dans un domaine situé entre la tension d'accumulation d'énergie (U_{E}) et la tension maximale de circuit intermédiaire (U_{z}).

12. Dispositif selon l'une des revendications 1 à 11, sachant que l'accumulateur d'énergie (8) est réalisé sous la forme d'un accumulateur lithium-ion.
